# EUROPÄISCHE PATENTSCHRIFT

(11) **EP 1 195 289 B1**
(45) Veröffentlichungstag und Bekanntmachung des Hinweises auf die Patenterteilung: **13.07.2005**
(21) Anmeldenummer: 01123357.4
(22) Anmeldetag: 09.10.2001
(51) Int. Cl.: B60N 2/54

(54) **Fahrzeugsitz mit einstellbarer Blattfeder**
Vehicle seat with adjustable leaf spring
Siège de véhicule avec ressort à lame réglable

(30) Priorität: 09.10.2000 DE 10049832; 09.03.2001 DE 10111488
(43) Veröffentlichungstag der Anmeldung: 10.04.2002
(73) Patentinhaber: Isringhausen GmbH & Co. KG, 32657 Lemgo (DE)
(72) Erfinder: von der Heide, Thomas, 32657 Lemgo (DE); Wagner, Norbert, 63681 Schlüchtern (DE)
(74) Vertreter: Schnekenbühl, Robert Matthias L.

(56) Entgegenhaltungen:
- EP-A- 0 836 031
- DE-A- 19 532 259
- FR-E- 22 471
- US-A- 119 907
- US-A- 4 093 197
- US-A- 5 016 861
- DATABASE WPI Section PQ, Week 199509 Derwent Publications Ltd., London, GB; Class Q14, AN 1995-065611 XP002187319 -& SU 1 833 324 A (MENEDZHER PRODN ASSOC), 7. August 1993 (1993-08-07)

## Beschreibung

Die Erfindung betrifft einen Fahrzeugsitz mit einstellbarer Blattfeder zur Federung einer Oberplatte gegenüber einer Unterplatte sowie einer Einstellvorrichtung zur Veränderung der Federkonstanten der Blattfeder.

Ein gattungsgemäßer Fahrzeugsitz ist aus der DE 195 32 259 A1 bekannt. Der dort vorgestellte Fahrersitz umfaßt ein Viergelenk, das einen verschiebbaren Auflagepunkt für eine Blattfeder aufweist. Die Verschiebung des Auflagepunktes und damit die Veränderung der Blattfederkonstanten geschieht durch Hohenverstellung des Sitzes, Längsverschiebung des Sitzes oder eine elektrische Regelung zur Adaption der Blattfederkonstanten an das Gewicht des Sitzbenutzers. Nachteilig ist, dass eine Verstellung der Federkonstanten der Blattfeder entweder in Verbindung mit der Sitzhöhenverstellung oder durch eine Linearverschiebung der gesamten Sitzkonstruktion erfolgt. Ein weiterer Nachteil ist, dass die gesamte Federkraft der Blattfeder als Torsionsmoment in deren Befestigungspunkt an der Sitzschale eingeleitet werden muß.

Der vorliegenden Erfindung liegt daher das Problem zugrunde, einen Fahrersitz bereitzustellen, bei dem die Federkonstante der Blattfeder und damit die Sitzhärte unabhängig von Sitzhöhe und Sitzposition einstellbar sind und zudem eine mechanisch günstigere Einleitung der Federkräfte in die Sitzkonstruktion erfolgt.

Dieses Problem wird durch einen Fahrersitz nach Patentanspruch 1 gelöst. Erfindungsgemäß ist vorgesehen, daß die Einstellvorrichtung zwei Schieber umfaßt, die beiderseits von Befestigungsbolzen für die Blattfeder angeordnet sind und gegenüber den Befestigungsbolzen verschiebbar sind. Je nach Wahl der Abstände zwischen Schieber und Befestigungsbolzen sowie der Charakteristik der Blattfeder werden so keine oder nur geringe Biegemomente an den Festlegepunkt der Blattfeder in die Sitzschale des Fahrersitzes eingeleitet.

Jede Blattfeder hat im entlasteten Zustand eine bestimmte genau definierte Federkonstante, wobei verschiedene Blattfedern verschiedene Federkonstanten haben. Die einer Blattfeder immanente Federkonstante kann erfindungsgemäß bevorzugt dadurch geändert werden, dass man Kraftübergangspunkte an der Blattfeder anlegt, die die Blattfeder zusätzlich zu einem ursprünglichen Belastungspunkt belasten. Die bevorzugte Federkonstanten der unbelasteten Blattfeder liegt im Bereich von 5 N/mm bis 30 N/mm. Die Blattfeder weist besonders bevorzugt in seitlicher Perspektive eine elipsenähnliche Form auf. Denkbar sind hier Flachfedern, insbesondere mit t ≤ 3 mm, besonders bevorzugt halbelliptische Flachfedern mit Augen. Diese Blattfedern sind bevorzugt auf einer Kunststoffplatte angeordnet, insbesondere an mindestens einem Ende festgelegt, beispielsweise geklemmt oder verschraubt. Oben können bevorzugt Kunststoffgleiter aufliegen. In einer bevorzugten Ausgestaltung ist die Blattfeder mit Vorspannung eingebaut. Dadurch erhöht sich die Traglast der Feder. Zudem wird ihr Schwingverhalten verbessert. Die Schieber sind so definiert, dass sie relativ zur Blattfeder bewegt werden können. Die Schieber liegen besonders bevorzugt auf der Blattfeder auf. Durch die beweglichen Schieber besteht die Möglichkeit verschiedene Auflagepunkte als Kraftübergangspunkten auf der Blattfeder auszuwählen. Je nach Auflagepunkt auf der Blattfeder ergibt sich eine unterschiedliche Federkonstante für die Blattfeder, wenn der Schieber auf der Blattfeder aufliegt und mit einer bestimmten Kraft aufgedrückt wird. Ändert sich die Lage der Schieber zur Blattfeder, so ändert sich die Federkonstante. Die Schieber bestehen aus hartem, zähem Material besonders bevorzugt aus Stahl oder Kunststoff und insbesonder aus GF30, d. h. Kunststoff mit einem Zusatz von 30 % Glasfasern, bzw. GK15, d. h. Kunststoff mit einem Zusatz von 15 % Glaskugeln, oder einem Duroplast oder einem Polyamid Die Schieber können über einen Teil der Breite der Auflagefläche der Blattfeder angeordnet sein, so dass sie nur punktweise auf der Blattfeder aufliegen können. Besonders bevorzugt sind die Schieber jedoch so ausgebildet, dass sie über die gesamte Breite der Blattfeder auf dieser aufliegen. Es können mehrere Schieber parallel nebeneinander oder versetzt auf der Blattfeder aufliegen. Die Schieber können dabei kegelförmig, kegelstumpfförmig, halbkugelförmig und pyramidenförmig ausgebildet sein und sind besonders bevorzugt mit einem pyramidenstumpfförmigen Querschnitt ausgebildet. Die Schieber sind bevorzugt mit einem Formstück verbunden, das die Verbindung zu einer Oberplatte und der Verstelleinrichtung herstellt. Zwischen den Schiebern und der Blattfeder ist in einer bevorzugten Ausgestaltung eine Kunststoffplatte eingefügt. Die Kunststoffplatte ermöglicht eine Verteilung der Lasteinleitung über die Oberfläche der Blattfeder und reduziert die Flächenpressung der Oberseite der Blattfeder im Bereich der Schieber. Damit wird die Lebensdauer der Blattfeder erhöht. Besonders bevorzugt weist die Kunststoffplatte eine Länge auf, die dem maximal einstellbaren Abstand der Schieber zueinander entspricht. Damit kann bei jeder möglichen Stellung der Schieber zueinander die Lasteinleitung in die Blattfeder durch die Kunststoffplatte über die Oberfläche der Blattfeder verteilt werden. Die Verstelleinnchtung ist so ausgestaltet, dass sie die Schieber relativ zur Blattfeder bewegen kann. Bevorzugt können die Schieber durch die Verstelleinrichtung auseinander und wieder zusammen bewegt werden. Insbesondere können die Schieber durch die Verstelleinrichtung längs des Federblatts einer Blattfeder bewegt werden. Der Vorteil der Einstellvorrichtung für die Federkraft liegt darin, dass die Federkonstante einer Blattfeder durch die Verstelleinrichtung und die Schieber geändert werden kann. Durch eine besonders bevorzugte Anordnung der Schieber am Scheitelpunkt der Blattfeder und eine Relativbewegung entlang des Federblatts kann die Federkonstante der Blattfeder erhöht werden, je weiter die Schieber vom Scheitelpunkt der Blattfeder entfernt werden. Die Schieber werden besonders bevorzugt längs des Federblatts bewegt. Ihren maximalen Wert erreicht die Federkonstante der Blattfeder, wenn die Schieber am weitesten vom Scheitelpunkt der Blattfeder entfernt sind. Durch diese Anordnung kann die Federkonstante der Blattfeder in vorteilhafter Weise in genau definierten Schritten geändert und eingestellt werden. Dabei werden lediglich mechanische Teile eingesetzt, die ohne Pneumatik und entsprechende zusätzliche Steuereinrichtungen auskommen.

Vorteilhaft ist, wenn die Schieber mittels einer Kulissenführung verschiebbar sind. Durch die Kulissenführung kann eine Drehbewegung eines Hebels in die Linearbewegung der Schieber umgewandelt werden, wobei die Wegeverhältnisse durch die Form der Kulisse vorgegeben werden können.

Die Einstellvorrichtung sieht in einer weiteren Ausgestaltung eine Verstelleinnchtung mit mindestens einer Führungskurve vor. Bevorzugt weist die Verstelleinrichtung zwei Führungskurven auf. Jede Führungskurven dient dazu einen der Schieber durch eine Führungskurve zu bewegen. Das eröffnet die Möglichkeit jeden Schieber mittels einer eigenen Führungskurve gesondert zu verschieben. Bevorzugt sind aber für beide Schieber Kurven mit gleicher Krümmung vorgesehen. Die Führungskurven führen erste Verbindungsmittel über die dann die Formstücke und dadurch die Schieber führbar sind. Als erste Verbindungsmittel kommen bevorzugt Bolzen bzw. Zapfen zum Einsatz. Daneben sind auch Führungsrollen, Schienenprofile, Zahnräder bzw. Zahnrad-Zahnradkamm-Kombinationen als Führungsmittel einsetzbar. Die Führungskurve ist auf der oder an der Verstelleinrichtung angeordnet, um mittels der ersten Verbindungsmittel die Schieber zu führen. Bevorzugt ist die Führungskurve eine Aussparung in der Verstelleinrichtung in der die Führungsmittel eingelassen oder versenkt werden können. Besonders bevorzugt ist die Führungskurve ein Durchbruch, der in die Verstelleinrichtung vorgesehen ist.

Vorteilhaft an der Anordnung einer solchen Führungskurve ist, dass sie einfach zu realisieren ist und funktionell zu handhaben sind. Zudem erfolgt die Führung der ersten Verbindungsmittel innerhalb der Verstelleinrichtung so präzise, dass ein exaktes Justieren der Federkonstanten ermöglicht wird und ein Spiel in der Einstellung ausgeschlossen ist. Weitere Vorteile liegen darin, dass die Einstellung über eine Führungskurve und Verbindungsmittel wie Bolzen robust und dauerhaft sind.

Besonders bevorzugt ist eine Führungskurve, die dem Teilstück einer logarithmischen Spirale entspricht. Dadurch können die Schieber über die Verbindungsmittel längs des Federblattes linear auseinander und wieder zusammen geführt werden.
Zudem kann durch die logarithmische Spiralanordnung eine Drehbewegung in eine lineare Bewegung umgesetzt werden. Darüber hinaus bietet die logarithmische Anordnung der Führungskurve den Vorteil, dass das Verhältnis von Drehbewegung der Verstelleinrichtung zum linearen Weg der Schieber auf dem Federblatt so ausgestaltet ist, dass zunächst durch eine große Drehbewegung der Verstelleinrichtung die Schieber nur einen genngen linearen Weg zurücklegen. Mit fortdauernder Drehung der Verstelleinnchtung gleicht sich das Verhältnis von Drehbewegung zum zurückgelegten Weg der Schieber immer mehr an. Dadurch ist eine (weitgehend) lineare Beziehung zwischen dem durch einen die Verstelleinrichtung bedienenden Hebel zurückgelegten Weg und der Federkonstante der Blattfeder herstellbar. Natürlich sind auch andere, federspezifische Formen von Führungskurven denkbar, je nachdem, welche Relation zwischen Verstellweg und Federkonstante gewünscht wird. Es ist bevorzugt auch eine umgekehrte logarithmische Anordnung der Führungskurve möglich. Dadurch wird bevorzugt auch eine gleichmäßige Einstellkraft erzielt. Über die Parameter der logarithmischen Spirale läßt sich so die Einstellkraft vorwählen.

Bei weiteren Variante der Einstellvorrichtung ist die Blattfeder aus mehreren Blattfederelementen, bevorzugt aus zwei Blattfederelementen, nämlich einem ersten und einem zweiten Blattfederelement, zusammengesetzt. Die beiden Blattfederelemente können identisch sein, sind aber bevorzugt unterschiedlich in Federkonstante und Blattfederform ausgebildet. Die Vorteile einer Zusammensetzung der Blattfeder aus zwei Federelementen ergeben sich dadurch, dass das erste Blattfederelement eine andere Federkonstante aufweist als das zweite Blattfederelement. Bevorzugt hat das erste Blattfederelement eine kleinere Federkonstante als das zweite Blattfederelement. Das erste Blattfederelement dient bevorzugt dazu, die Kraft der Einstellelemente aufzunehmen und an die zweite Blattfeder zu übertragen.

Die Einstellvorrichtung umfaßt bevorzugt eine Justieremnchtung. Die Justiereinrichtung kann eine Drehvorrichtung oder eine Schiebevorrichtung oder eine Kombination von beiden sein, ist aber besonders bevorzugt eine Schiebevorrichtung in Form eines Hebels.

Die Verstelleinrichtung kann ein Parallelogrammschieber sein, der mittels Kniehebelprinzip die Schieber bewegt. Darüber hinaus können als Verstelleinrichtung Umlenkrollen in Betracht kommen, die über ein Seilzugsystem die Schieber auseinander und wieder zusammen führen können. Außerdem kann die Verstelleinrichtung Kurvenscheiben umfassen. Bevorzugt kommt als Verstelleinrichtung eine Anordnung aus Zahnrädern und Zahnstangen zur Anwendung und ganz besonders bevorzugt der Einsatz einer Verstellleiste. Der Vorteil einer Verstellleiste besteht darin, dass die Verstellleiste einfach zu realisieren ist, aus wenig Einzelteilen aufgebaut und ist und damit Material und Gewicht spart. Ein weiterer Vorteil ergibt sich dadurch, dass die Verstellleiste durch ihre einfach Form räumlich bestens in die Einstellvorrichtung integriert werden kann.

Besonders bevorzugt weist der Fahrzeugsitz eine Oberplatte, eine Unterplatte und mindestens einen Schwenkbügel auf, wobei die Oberplatte über die Einstellvorrichtung und den Schwenkbügel vertikal zur Unterplatte bewegt werden kann.

Vorteilhaft ist es, wenn die Schieber über die Verstellung der Verstelleinrichtung auseinander oder zusammen schiebbar sind und in einer Führung der Oberplatte über mindestens zwei weitere Verbindungsmittel linear führbar sind. Die Oberplatte ist bevorzugt eine Schale auf der das Sitzoberteil des Fahrzeugsitzes angeordnet ist, während die Unterplatte zur Befestigung am Fahrzeugboden vorgesehen ist. Die Unterplatte weist bevorzugt Aussparungen und besonders bevorzugt Aussparungen mit einer linearen Führung auf, die die zweiten Verbindungsmittel aufnehmen und die ganz besonders bevorzugt rechteckförmig sind. Der Schwenkbügel führt die Oberplatte relativ zur Unterplatte. Als Schwenkbugel werden bevorzugt zwei Schwenkbügel verwendet, die ganz besonders bevorzugt in einer orthogonalen Ausrichtung zueinander angeordnet sind.

Die Schwenkbügel sind bevorzugt mit der Oberplatte drehbar über mindesten eine Verbindungseinrichtung und bevorzugt über mehrere Lagerböcke, besonders bevorzugt über einen und ganz besonders bevorzugt über zwei Lagerböcke mit der Oberplatte verbunden, während sie mit der Unterplatte über mindestens eine lose Führung, besonders bevorzugt über zwei lose Führungen verbunden sind. Als lose Führungen sind bevorzugt Langlöcher im Schwenkhebel und ganz besonders bevorzugt aus Ausgleichslaschen vorgesehen. Vorteil dieser Anordnung ist, dass die Oberplatte gegenüber der Unterplatte als Parallelführung vertikal und in einem unverkippten Zustand führbar ist, so dass der Fahrzeugsitz vertikal hin- und her bewegbar ist und immer eine weitgehend parallele Führung zur Unterplatte aufweist. Die Ausgleichslaschen weisen dabei den Vorteil auf, dass sie die Schwenkbügel exakt fuhren können und widerstandsfähig gegen Verschleiß sind.

Eine weitere vorteilhafte Ausführung besteht darin, dass mindestens zwei Schieber über die Verstellung der Verstelleinrichtung auseinander und zusammen schiebbar sind und in einer Führung in der Oberplatte über mindestens zwei weitere Verbindungsmittel linear führbar sind Die weiteren Verbindungsmittel sind vorzugsweise Bolzen oder Zapfen. Der Vorteil einer solchen Anordnung besteht darin, dass die Schieber nochmals zusätzlich fixiert werden können und dadurch noch exakter geführt werden können. Weiterhin ist vorteilhaft, dass die Schieber nicht permanent auf der Blattfeder aufliegen, sondern frei schwebend, nur über die zweiten Verbindungsmittel gehalten an der Oberplatte angeordnet sind und erst im Falle einer Krafteinwirkung auf die Oberplatte auf die Blattfeder aufsetzen. Dadurch erzielen Blattfeder und Schieber eine höhere Lebenserwartung. Weiterhin werden die Schieber dadurch in der horizontalen Position gehalten.

Vorteilhaft ist es, wenn zwischen den Schiebern und der Blattfeder eine Kunststoffplatte angeordnet ist. Die Kunststoffplatte bewirkt ein Gleiten der Schieber bei einer geringen Reibung.

Vorteilhafte Ausgestaltungen der Erfindung werden weiter in den Zeichnungen erläutert. Hierbei zeigen:
- Figur 1a: eine erfindungsgemäße Vomchtung zur Einstellung einer Blattfeder nach einem ersten Ausführungsbeispiel;
- Figur 1b: eine erfindungsgemäße Vomchtung zur Einstellung einer Blattfeder nach einem zweiten Ausführungsbeispiel;
- Figur 2a: ein Fahrersitz mit einer erfindungsgemäßen Einstellvorrichtung mit nahe beieinander stehenden Schiebern;
- Figur 2b: ein Fahrersitz mit einer erfindungsgemäßen Einstellvorrichtung mit auseinander geschobenen Schiebern;
- Figur 3: eine Perspektivansicht einer Verstellleiste;
- Figur 4: eine Perspektivansicht eines Formstücks mit einem Schieber;
- Figur 5a: eine Verstelleinrichtung ohne Blattfeder mit auseinander geschobenen Schiebern;
- Figur 5b: eine Verstelleinrichtung ohne Blattfeder mit zusammen geschobenen Schiebern;
- Figur 6: ein Teilsystem eines Fahrersitzes nach einem ersten Ausführungsbeispiel der vorliegenden Erfindung;
- Figur 7: ein Teilsystem eines Fahrzeugsitzes nach einem zweiten Ausfuhrungsbeispiel der vorliegenden Erfindung;
- Figur 8a: eine erste, zweiteilige Blattfeder in einer perspektivischen Ansicht;
- Figur 8b: eine zweite, zweiteilige Blattfeder in einer perspektivischen Ansicht;
- Figur 8c: ein Detail der zweiteiligen Blattfeder gemäß Fig. 8b in einer explosionsartigen Darstellung;
- Figur 8d: eine dritte, zweiteilige Blattfeder in einer perspektivischen Ansicht; und
- Figur 9: eine zweiteilige Blattfeder mit einem Kunststoffelement in einer perspektivischen Ansicht.

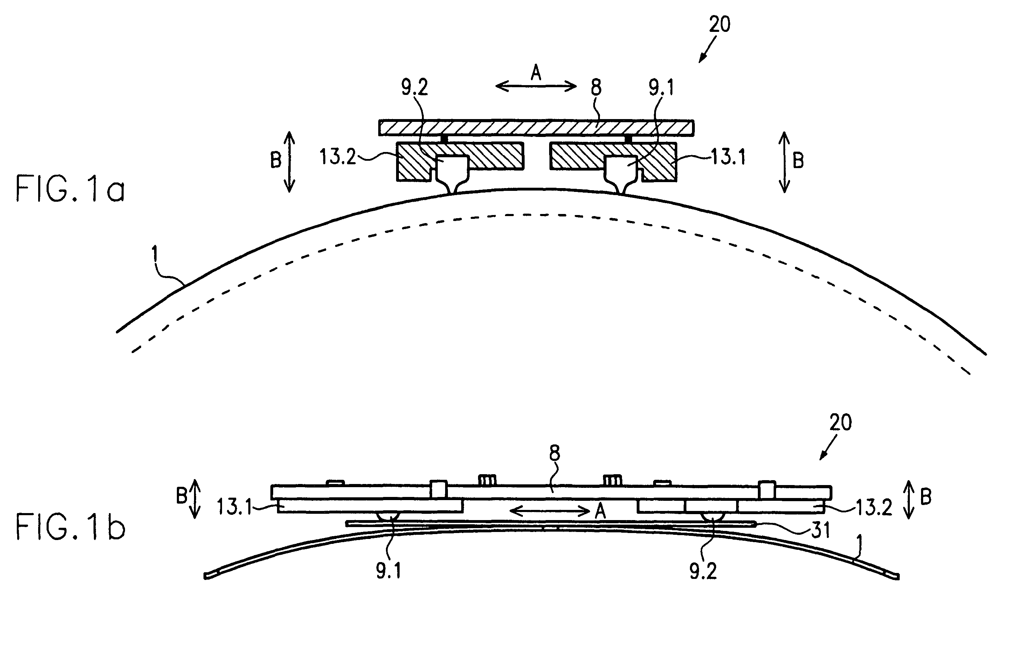

In **Figur 1a** ist eine erfindungsgemäße Vorrichtung 20 zur Einstellung einer Blattfeder 1 nach einer ersten Ausführungsform dargestellt. Dabei zeigt Figur 1a eine Blattfeder 1 auf der Schieber 9.1, 9.2 und Formstücke 13.1, 13.2 angeordnet sind Auf den Formstücken 13.1, 13.2 liegt eine Verstelleinrichtung 8 auf.

Die Schieber 9.1, 9.2 sind entlang des Pfeiles A und des Pfeiles B bewegbar. Über die Verstelleinrichtung 8 und die Formstücke 13.1, 13.2 können die Schieber in horizontaler Richtung (Pfeil A) frei beweglich auf der Blattfeder 1 geführt werden. Darüber hinaus sind die Schieber 9.1, 9.2 in vertikaler Richtung (Pfeil B) führbar. Durch die verschiedene Einstellungen der Schieber 9.1, 9.2 auf der Blattfeder 1 kann die Blattfeder 1 an verschiedenen Stellen belastet werden. Durch die horizontale Bewegbarkeit der Schieber 9.1, 9.2 kann die Blattfeder 1 zudem auch in vertikaler Richtung gedrückt bzw. bewegt werden. Die Federkonstante ändert sich dabei je nach Auflage der Schieber 9.1, 9.2 und zwar derart, dass die Federkonstante umso größer ist, je weiter die Schieber 9.1, 9.2 auseinander stehen. Die Schieber 9.1, 9.2 sind einzeln unabhängig von einander bewegbar, besonders bevorzugt aber in Abhängigkeit von einander bewegbar. Im unbelasteten Zustand liegen die Schieber nicht auf der Blattfeder auf. Die relative Lage der Blattfeder zu den Schiebern ist dann durch die gestrichelte Linie dargestellt, die die Postition der Blattfeder zu den Schiebern in unbelasteter Situation darstellen soll.

**Figur 1b** zeigt unter Beibehaltung gleicher Bezugzeichen für gleiche Bauelemente eine erfindungsgemäße Vorrichtung 20 zur Einstellung einer Blattfeder 1 nach einer zweiten Ausführungsform. Zur Vermeidung von Wiederholung werden im folgenden lediglich die unterschiedlichen Bauelemente näher beschrieben. Bei der in Figur 1b gezeigten Ausführungsform ist zwischen den Schiebern 9.1 und 9.2 und der Blattfeder 1 eine Kunststoffplatte 31 vorgesehen. Im Falle einer Belastung der Blattfeder 1 durch die Schieber 9.1 und 9.2 wird diese Kunststoffplatte 31 durch die Schieber 9.1 und 9.2 an die Blattfeder 1 gedrückt. Durch die große Auflagefläche der Kunststoffplatte 31 auf der Blattfeder 1 wird die von ein Schiebern 9.1 und 9.2 eingebrachte Kraft über eine große Flache in die Blattfeder 1 eingeführt. Dadurch wird die Flächenpressung der Oberseite der Blattfeder 1 im Vergleich zu der Ausführungsform gemäß Figur 1a, bei der die Kraft durch die Spitzen der Schieber 9.1 und 9.2 eingeführt wird, reduziert.

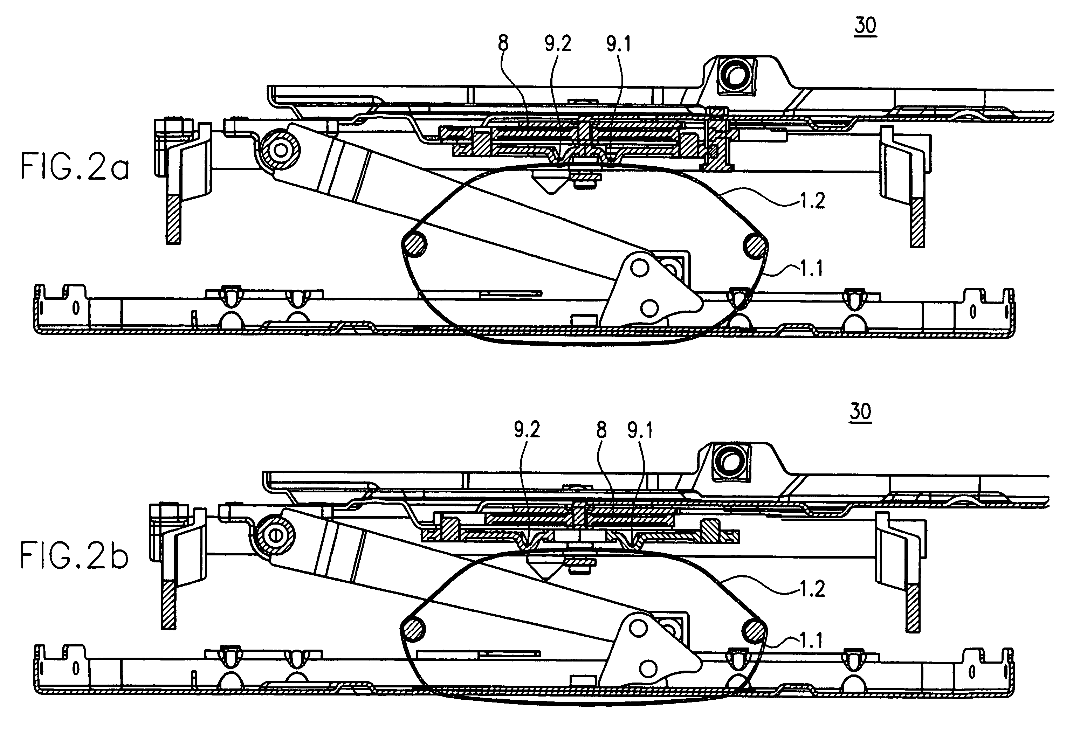

In **Figur 2a** und **Figur 2b** ist ein Fahrersitz 30 mit einer erfindungsgemäßen Einstellvomchtung 20 dargestellt, wobei in Figur 2a die Schieber 9.1, 9.2 nahe beieinander stehen und in Figur 2b die Schieber 9.1, 9.2 auseinander geschoben sind. In den Figuren 2a, 2b sind die Schieber 9.1, 9.2 auf einem Blattfederelement 1.2 angeordnet. Über den Schiebern 9.1, 9.2 ist eine Verstelleinrichtung 8 vorgesehen.

In Figur 2a sind die Schieber 9.1, 9.2 am oberen Anschlag angeordnet und der Sitz 30 gerade so belastet, dass die Schieber 9.1, 9.2 die Blattfeder 1 gerade berühren. Ist der Sitz 30 vollkommen entlastet, so berühren die Schieber 9.1, 9.2 die Blattfeder 1 nicht. Im entlasteten Fall ist die Federkonstante der Blattfeder 1 die dieser Blattfeder 1 immanente Federkonstante. Werden die Schieber 9.1, 9.2, wie in Figur 2a dargestellt, auf die Blattfeder 1 aufgebracht, so ändert sich die Federkonstante hin zu einem höheren Wert. Bewegt man die Schieber 9.1, 9.2 längs der Blattfeder 1 durch die Verstelleinrichtung 8 bis in eine Stellung, wie sie in Figur 2b dargestellt ist, dann ändert sich mit der Stellung der Schieber 9.1, 9.2 die Federkonstante der Blattfeder 1. Die Federkonstante der Blattfeder 1 erreicht ihren maximalen Wert dann, wenn die Schieber 9.1, 9.2 ihre Endstellung erreicht haben. Die Endstellung der Schieber 9.1, 9.2 ist dadurch definiert, dass die Schieber 9.1, 9.2 in dieser Stellung nicht mehr weiter auseinander bewegt werden können.

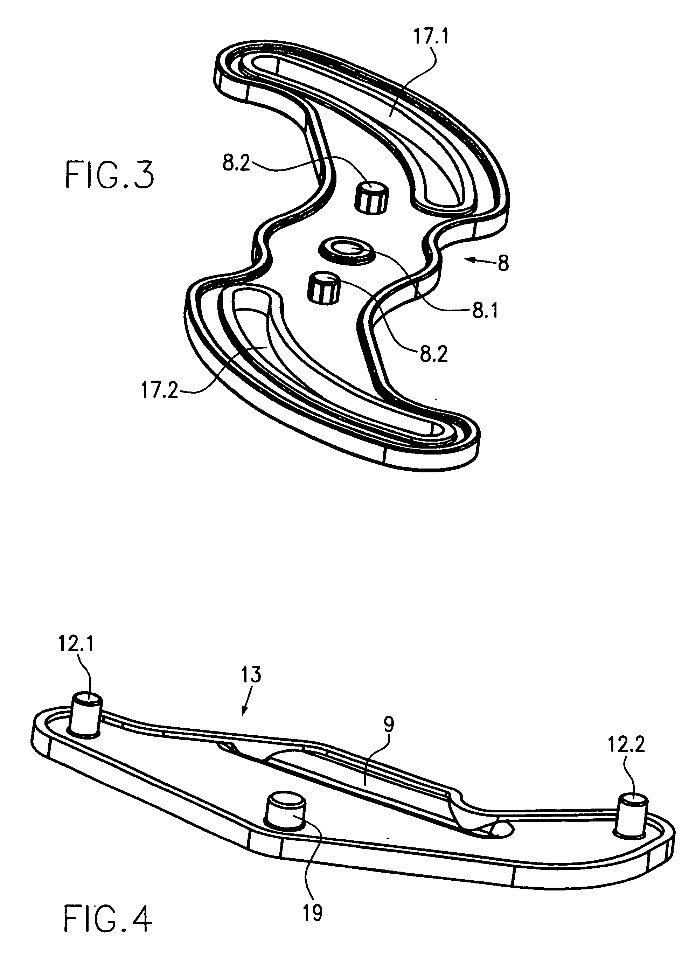

In **Figur 3** ist eine Verstelleinrichtung 8 dargestellt. Die Verstelleinrichtung 8 weist eine erste Führungskurve 17.1 und eine zweite Führungskurve 17.2 auf. Zudem sind eine Öffnung 8.1 und zwei Zapfen 8.2 vorgesehen.

Die Verstelleinrichtung 8 dient bevorzugt dazu die Schieber längs der Blattfeder zu bewegen. Die Verstelleinrichtung 8 wird über eine Justiereinrichtung geführt, die an den Zapfen 8.2 angeordnet wird. Die Verstelleinrichtung 8 kann um die Öffnung 8.1 drehbar gelagert werden. In den Führungskurven 17.1, 17.2 können erste Verbindungsmittel eingelassen werden, die Formstücke, an denen die Schieber vorgesehen sind, bewegen. Die Führungskurven 17.1, 17.2 können eine beliebige Form aufweisen und unterschiedlich ausgestaltet sein. Die Führungskurven 17.1, 17.2 sind aber besonders bevorzugt gleich ausgestaltet und haben die Form eines Teilstücks einer logarithmischen Spirale.

In **Figur 4** ist ein Formstück 13 mit einem Schieber 9 dargestellt. Das Formstück 13 weist einen Schieber 9, eine Aufnahme im Formstück 19 und zwei weitere Verbindungsmittel 12.1, 12.2 auf.

Der Schieber 9 ist dafür vorgesehen, dass er längs der Blattfeder bewegt werden kann. Die beiden weiteren Verbindungsmittel 12.1, 12.2 können in linearen Führungen in der Oberplatte geführt werden, während die Aufnahme 19 über erste Verbindungsmittel mit der Verstelleinrichtung 8 verbunden ist. Der Schieber 9 ist bevorzugt fest am Formstück angeordnet, besonders bevorzugt aber beweglich zu dem Formstück angeordnet. Ganz besonders bevorzugt ist eine Anordnung des Schiebers 9 am Formstück 13 beweglich in horizontaler und vertikaler Richtung vorgesehen.

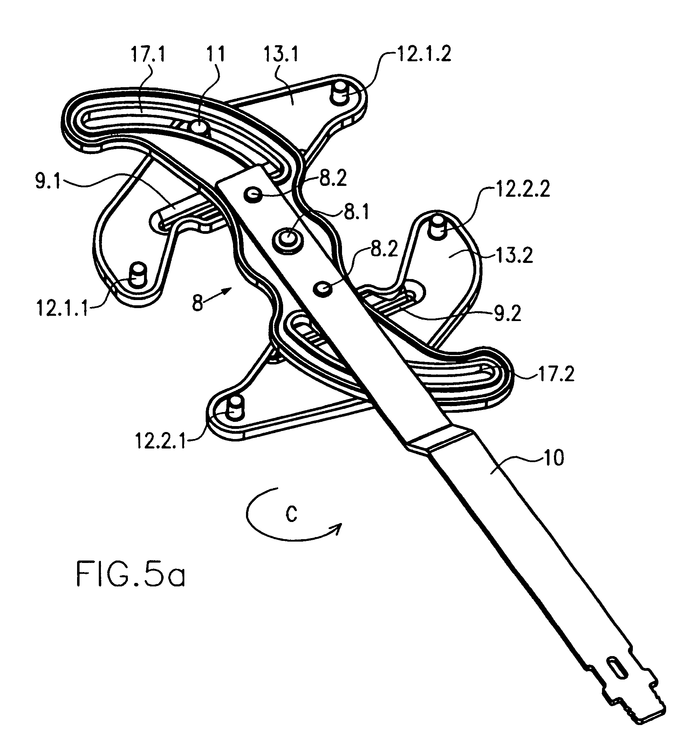

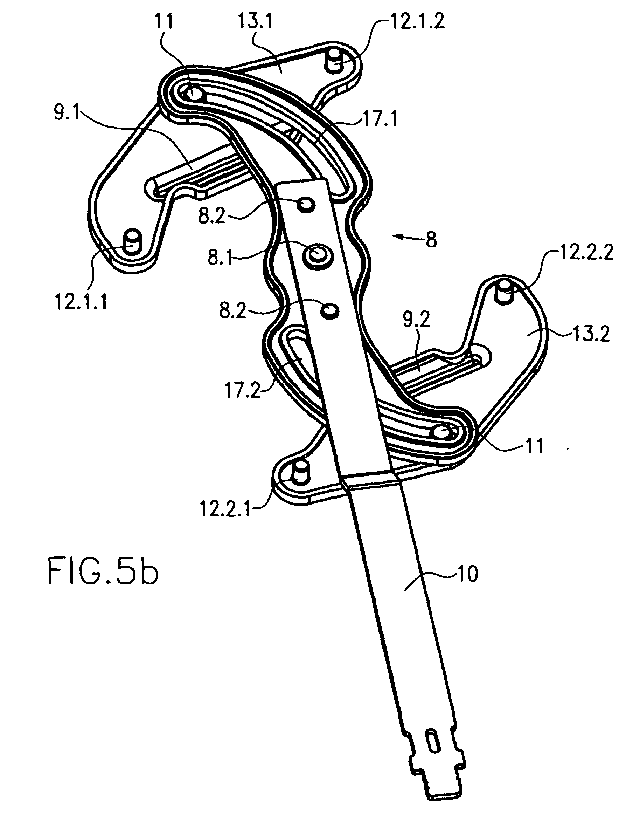

In den **Figuren 5a** und in **Figur 5b** ist eine Einstellvorrichtung ohne Blattfeder dafür mit Justiereinrichtung 10 dargestellt. Die Verstelleinrichtung 8 ist mit der Justiereinnchtung 10 über die beiden Zapfen 8.2 verbunden und um die Öffnung 8.1 drehbar gelagert. In den beiden Führungskurven 17.1, 17.2 der Verstelleinrichtung 8 sind erste Verbindungsmittel vorgesehen, die in die Aufnahme des Formstücks (nicht dargestellt) eingelassen sind. Durch die Führungskurven werden die beiden Formstücke 13.1, 13.2 mit den beiden Schiebern 9.1, 9.2 geführt. Das erste Formstück 13.1 weist zudem die beiden weiteren Verbindungsmittel 12.1.1, 12.1.2 auf, während das zweite Formstück 13.2 die beiden weiteren Verbindungsmittel 12.2.1, 12.2.2 aufweist. Die weiteren Verbindungsmittel 12.1.1 - 12.2.2 sind in Führungen in der Oberplatte linear führbar.

In Figur 5a ist die Einstellvorrichtung in der Position dargestellt, in der die Schieber 9.1, 9.2 eine mittlere Stellung auf der Blattfeder (nicht dargestellt) eingenommen haben. In dieser Stellung weist die Federkonstante der Blattfedern einen bestimmten Wert auf, der zwischen dem minimalen Wert der Blattfeder (unbelasteter Zustand der Blattfeder) und dem maximalen Wert der Federkonstante der Blattfeder liegt. Wird die Justiereinrichtung 10 um die drehbar gelagerte Öffnung 8.1 in die Richtung des Pfeiles C bewegt, so werden die ersten Verbindungsmittel 11 in den Führungskurven 17.1, 17.2 nach außen gedrückt (in Richtung entferntes Ende). Dadurch werden die Formstücke 13.1, 13.2 und mit ihnen die Schieber 9.1, 9.2 ebenfalls nach außen gedrückt und erreichen die Position, wie sie in Figur 5b dargestellt ist. Da die weiteren Verbindungsmittel 12.1.1 - 12.2.2 in linearen Führungen in der Oberplatte angeordnet sind, verläuft die Bewegung der Schieber 9.1, 9.2 auf der Blattfeder ebenfalls linear. In den Figuren 2a, 2b ist die Änderung der Stellung der Schieber 9.1, 9.2 in ähnlicher Weise dargestellt, wie in den Figuren 5a, 5b, nur dass in den Figuren 2a, 2b die Schieber 9.1, 9.2 von einer Anfangsposition in eine mittlere Position bewegt werden und in den Figuren 5a, 5b von einer mittleren Position in eine Endposition.

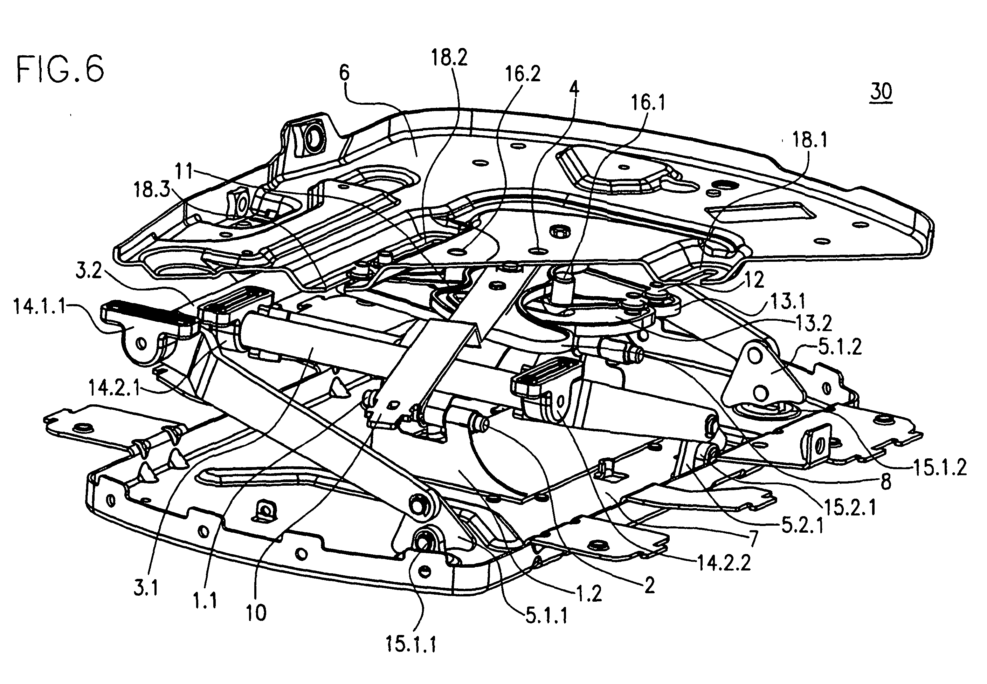

In **Figur 6** ist eine Ausführungsform eines Fahrersitzes dargestellt. Er weist eine Oberplatte 6 und eine Unterplatte 7 auf, die über zwei orthogonal zu einander angeordnete Schwenkbügel 3.1, 3.2 und einer Vorrichtung zur Einstellung einer Blattfeder miteinander verbunden sind. Der erste Schwenkbügel 3.1 ist über zwei Lagerböcke 14.1.1, 14.1.2 an der Oberplatte 6 angeordnet. Mit der Unterplatte 7 ist der erste Schwenkbügel 3.1 über zwei Ausgleichslaschen 5.1.1, 5.1.2 und zwei Aufnahmen 15.1.1, 15.1.2 verbunden. Analog ist der zweite Schwenkbügel 3.2 mit der Oberplatte 6 und der Unterplatte 7 verbunden. Zwischen der Oberplatte 6 und der Unterplatte 7 ist eine Blattfeder 1 vorgesehen. Die Blattfeder 1 ist auf der Unterplatte 7 angeordnet. Dabei liegt das zweite Blattfederelement 1.2 auf der Unterplatte 7 auf und ist über zwei Bolzen 2 für Blattfedern mit dem ersten Blattfederelement 1.1 verbunden. Weiterhin ist das erste Blattfederelement 1.1 mit der Oberplatte 6 über zwei Befestigungsbolzen 16.1, 16.2 verbunden. Die Formstücke 13.1, 13.2 mit den integrierten Schiebern sind unterhalb der Oberplatte 6 angeordnet und über die weiteren Verbindungsmittel 12.1.1 - 12.2.2 in den Führungen 18.1 - 18.4 der Oberplatte 6 linear führbar gelagert. Auf den Formstücken 13.1, 13.2 liegt die Verstelleinrichtung 8 auf, die zusammen mit der Justiereinrichtung 10 um den Haltebolzen 4 drehbar gelagert ist. Die Formstücke 13.1, 13.2 werden durch die Verstclleinnchtung 8 über die Verbindungsmittel 11 verstellt.

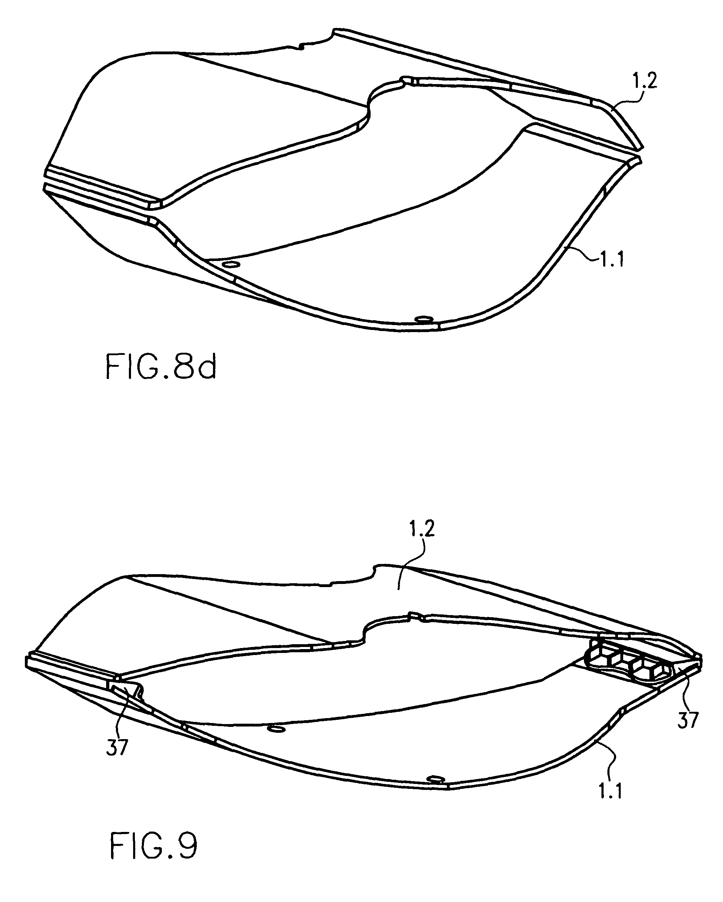

Bei einer alternativen Ausführung der Verbindung zwischen erstem Blattfederelement 1.1 und zweitem Blattfederelement 1.2 ist gemäß **Fig. 9** statt einer Bolzenverbindung jeweils ein Kunststoffelement 37 vorgesehen, das jeweils an einem Ende des ersten Blattfederelementes 1.1 befestigt ist. Das zweite Blattfederelement 1.2 liegt auf dem Kunststoffelement 37 auf, ohne fest mit diesem verbunden zu sein. Auf diese Weise kann das zweite Blattfederelement 1.2 reibungsarm über das Kunststoffelement gleiten. Die Fixierung der Blattfederelemente erfolgt allein durch deren Befestigung an Oberplatte 6 bzw. Unterplatte 7. Die Kunststoffelemente 37 können statt an dem ersten Blattfederelement 1.1 auch an dem zweiten Blattfederelement 1.2 befestigt sein.

Im unbelasteten Zustand wird die Oberplatte 6 allein durch die Federkraft der Blattfeder 1 und die Befestigungsbolzen 16.1, 16.2 gehalten. Die Schieber liegen nicht auf dem ersten Blattfederelement 1.1 auf. Belastet man die Oberplatte 6 des Fahrersitzes 30 mit einer Kraft, so ergeben sich Kraftübergangspunkte von der Oberplatte 6 auf die Blattfeder 1 nicht nur durch die beiden Befestigungsbolzen 16.1, 16.2, sondern auch durch die Auflagepunkte der Schieber auf dem ersten Blattfederelement 1.1. Durch diese zusätzlichen Kraftübergangspunkte ändert sich die Federkonstante der Blattfeder 1. Verschiedene Federkonstanten der Blattfeder 1 lassen sich dadurch erreichen, dass die Schieber in ihrer Stellung längs der Blattfeder 1 veränderbar sind. Die Veränderung der in die Formstücke 13.1, 13.2 integrierten Schieber wird über die Justiereinrichtung 10 und die Verstelleinrichtung 8 vorgenommen. Die Oberplatte 6 wird gegen die Unterplatte 7 durch Schwenkbugel 3.1, 3.2 geführt. Die Schwenkbügel 3.1, 3.2 ermöglichen eine unverkippte und parallele Führung der Platten. Zum Ausgleich der Bewegung sind an den Schwenkbügeln 3.1, 3.2 Ausgleichslaschen 5 angeordnet.

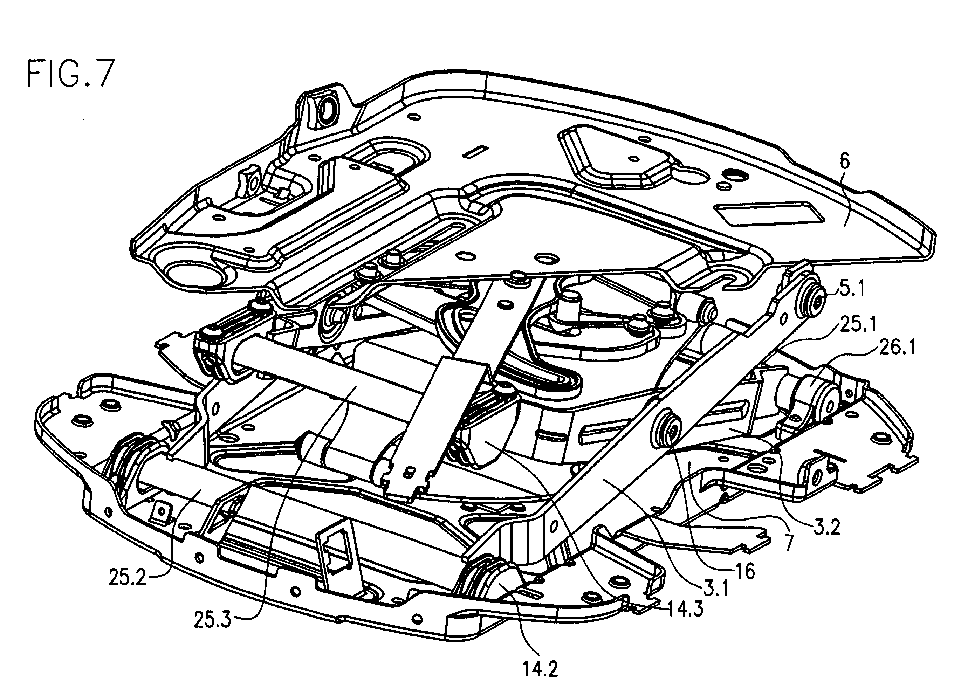

In **Figur 7** ist ein weiteres Teilsystem eines Fahrersitzes ähnlich dem in Figur 6 gezeigt. Bei diesem Teilsystem sind Schwenkbügel 3.1 und 3.2 parallel zueinander ausgerichtet und führen die Oberplatte 6 parallel zur Unterplatte 7. Der Schwenkbügel 3.2 ist mit einem ersten Rohr 25.1 verschweißt und dieses an der Unterplatte 7 drehbar im ersten Lager 26.1 gelagert. An der Oberplatte 6 ist der erste Schwenkbügel 3.1 mit Hilfe einer Lasche 5.1 drehbar gelagert. Im vorderen Bereich der Oberplatte 6 und der Unterplatte 7 sind die Schwenkbügel 3.1, 3.2 mit den Rohren 25.2, 25.3 verschweißt und diese drehbar und horizontal verschiebbar in den Lagerböcken 14.2 und 14.3 in ihrem Drehpunkt drehbar mit Verbindungseinrichtungen 16 verbunden. Durch die Rohre 25.1, 25.2 und 25.3 und der Verbindungseinrichtung 16 ist das System stabil in Längs- und in Querrichtung.

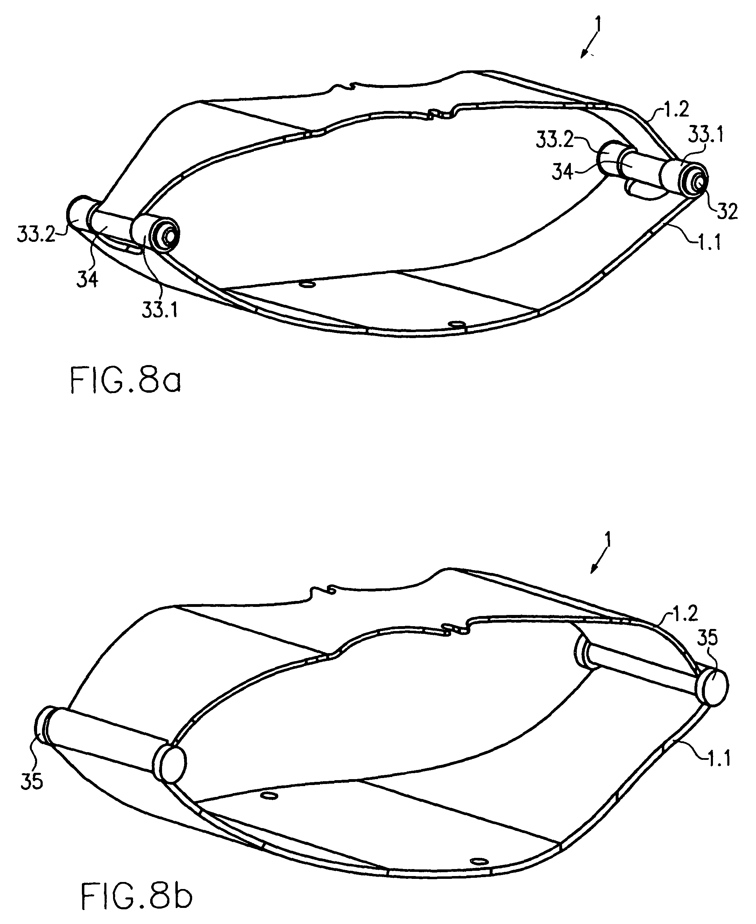

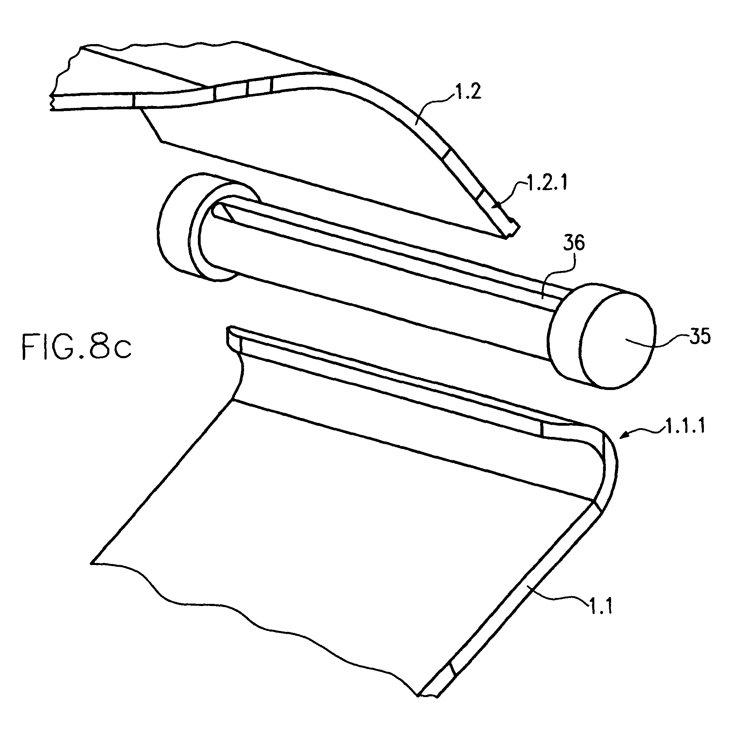

Die **Figuren 8a, 8b, 8c und 8d** zeigen Ausführungsformen einer zweiteiligen Blattfeder. In ihrer Funktion gleiche Bauelemente sind in den Figuren 8a, 8b, 8c und 8d mit gleichen Bezugszeichen gekennzeichnet.

Die in Figur 8a gezeigte Blattfeder 1 setzt sich aus zwei Blattfederelementen 1.1 und 1.2 zusammen. Diese sind an ihren Enden über einen Bolzen 32 miteinander verbunden. Jeweils ein Bolzen 32 ist in an beiden Enden des ersten Blattfedeelements 1.1 vorgesehenen Ösen 33.1 und 33.2 gehalten. Zwischen den Ösen 33.1 und 33.2 ist ein laschenartig ausgebildetes Ende 34 des zweiten Blattfederelementes 1.2 um den Bolzen 32 gepresst und verbindet damit das erste Blattfederelement mit dem zweiten Blattfederelement.

Die in Figur 8b gezeigte Blattfeder 1 setzt sich ebenfalls aus zwei Blattfederelementen 1.1 und 1.2 zusammen. Über ein Verbindungselement 35 sind diese Blattfederelemente an ihren Enden miteinander formschlüssig verbunden. Das Verbindungselement 35 weist Schlitze 36 auf, in die die stegförmigen Enden 1.1.1 und 1.2.1 der Blattfederlemente 1.1 und 1.2 eingeführt sind. Die Anordnung des oberen Schlitzes 36 auf dem Verbindungselement 35 und die Form der stegförmigen Enden 1.1.1 und 1.2.1 zeigt die Explosionsdarstellung der Fig. 8c.

Die Blattfeder 1 in der Ausführungsform der Figur 8d besteht aus zwei Blattfederelementen 1.1 und 1.2. Diese sind an ihren Enden nicht fest miteinander verbunden. Die Blattfederelemente 1.1 und 1.2 werden durch nicht näher dargestellte Elemente derart zueinander gehalten und geführt, daß die Enden jeweils eines Blattfederelements das andere Blattfederelement berührt, wenn die Blattfeder 1 belastet wird. In der dargestellten Ausführungsform berührt das Ende des Blattfederelements 1.1 das Ende des Blattfederelements 1.2.

Mit dem erfindungsgemäßen Federsystem wurde bei Kraftfahrzeugsitzen die Möglichkeit eröffnet, das Federsystem des Kraftfahrzeugsitzes je nach Gewichtskraft des Fahrzeugführers zu justieren. Damit wurde eine Erfindung Vorrichtung zur Einstellung einer Blattfeder und ein Fahrersitz mit dieser Einstellvorrichtung, sowie ein Verfahren zur Änderung der Federkonstanten einer Blattfeder bei einem Fahrersitz vorgestellt.

Durch die Verstelleinrichtung zur Einstellung einer Blattfeder läßt sich die Federkraft des Fahrersitzes eines Kraftfahrzeuges optimal, nämlich je nach Körpergewicht des betreffenden Kraftfahrers, einstellen. Die Einstellung erfolgt anhand der Veränderung der Federkonstanten der Blattfeder. Die Federkonstante kann mittels zweier Schieber dadurch verändert werden, dass verschiedene Kraftübergangspunkte auf der Blattfeder definiert werden. Durch die Verstelleinrichtung und eine Justiereinrichtung können die beiden Schieber auf der Blattfeder bewegt werden. Die Schieber ändern die Kraftübergangspunkte auf der Blattfeder und dadurch die Federkonstante der Blattfeder. Befinden sich die Schieber am Scheitelpunkt der Blattfeder, so ist die Federkonstante der Blattfeder klein, befinden sie sich hingegen an dem Punkt ihrer weitesten Entfernung, so ist die Federkonstante groß.

### Bezugszeichenliste

- 1: Blattfeder
- 1.1: erstes Blattfederelement
- 1.2: zweites Blattfederelement
- 1.1.1: stegförmiges Ende
- 1.2.1: stegförmiges Ende
- 2: Bolzen für Blattfedern
- 3: Schwenkbügel
- 3.1: erster Schwenkbügel
- 3.2: zweiter Schwenkbügel
- 4: Haltebolzen
- 5: Ausgleichslaschen
- 5.1.1: erste Ausgleichslasche des ersten Schwenkbügels
- 5.1.2: zweite Ausgleichslasche des ersten Schwenkbügels
- 5.1.3: erste Ausgleichslasche des zweiten Schwenkbügels
- 5.1.4: zweite Ausgleichslasche des zweiten Schwenkbügels
- 6: Oberplatte
- 7: Unterplatte
- 8: Verstelleinrichtung
- 8.1: Öffnung
- 8.2: Zapfen
- 9: Schieber
- 9.1: erster Schieber
- 9.2: zweiter Schieber
- 10: Justiereinrichtung
- 11: erstes Verbindungsmittel
- 12: weiteres Verbindungsmittel
- 12.1.1: erstes weiteres Verbindungsmittels des ersten Formstücks
- 12.1.2: zweites weiteres Verbindungsmittel des ersten Formstücks
- 12.2.1: erstes weiteres Verbindungsmittel des zweiten Formstücks
- 12.2.2: zweites weiteres Verbindungsmittel des zweiten Formstücks
- 13: Formstück
- 13.1: erstes Formstück
- 13.2: zweites Formstück
- 14: Lagerböcke
- 14.1.1: erster Lagerbock des ersten Schwenkbügels
- 14.1.2: zweiter Lagerbock des ersten Schwenkbügels
- 14.2.1: erster Lagerbock des zweiten Schwenkbügels
- 14.2.2: zweiter Lagerbock des zweiten Schwenkbügels
- 15: Aufnahmen
- 15.1.1: erste Aufnahme des ersten Schwenkbügels
- 15.1.2: zweite Aufnahme des ersten Schwenkbügels
- 15.2.1: erste Aufnahme des zweiten Schwenkbügels
- 15.2.2: zweite Aufnahme des zweiten Schwenkbügels
- 16: Befestigungsbolzen
- 16.1: erster Befestigungsbolzen
- 16.2: zweiter Befestigungsbolzen
- 17: Führungskurve
- 17.1: erste Führungskurve
- 17.2: zweite Führungskurve
- 18: Führung in der Oberplatte
- 18.1: erste Führung
- 18.2: zweite Führung
- 18.3: dritte Führung
- 18.4: vierte Führung
- 19: Aufnahme im Formstück
- 19.1: erste Aufnahme
- 19.2: zweite Aufnahme
- 20: Vomchtung zur Einstellung einer Blattfeder
- 25: Rohr
- 26: Lager
- 30: Fahrersitz
- 31: Kunststoffplatte
- 32: Bolzen
- 33.1: Öse
- 33.2: Öse
- 34: laschenartiges Ende
- 35: Verbindungselement
- 36: Schlitz
- 37: Kunststoffelemente

## Patentansprüche

1. Fahrzeugsitz (30) mit einstellbarer Blattfeder (1) zur Federung einer Oberplatte (6) gegenüber einer Unterplatte (7) sowie einer Einstellvorrichtung (20) zur Veränderung der Federkonstanten der Blattfeder (1),
**dadurch gekennzeichnet, dass** die Einstellvorrichtung (20) zwei Schieber (9) umfasst, die beiderseits von Befestigungsbolzen (16.1, 16.2) für die Blattfeder (1) angeordnet sind und gegenüber den Befestigungsbolzen (16.1, 16.2) verschiebbar sind.

2. Fahrzeugsitz (30) nach dem vorhergehenden Anspruch,
**dadurch gekennzeichnet, dass** die Schieber (9) mittels einer Kuhssenführung (17, 19) verschiebbar sind.

3. Fahrzeugsitz (30) nach einem der vorhergehenden Ansprüche,
**dadurch gekennzeichnet, dass** die Kulissenführung eine Verstelleinrichtung (8) mit mindestens einer Führungskurve (17) aufweist und über die Führungskurve (17) erste Verbindungsmittel (11) führbar sind, über die die Schieber (9) führbar sind.

4. Fahrzeugsitz (30) nach Anspruch3, **dadurch gekennzeichnet, dass** die mindestens eine Führungskurve (17) dem Teilstück einer logarithmischen Spirale entspricht.

5. Fahrzeugsitz (30) nach einem der vorhergehenden Ansprüche, **dadurch gekennzeichnet, dass** die Blattfeder (1) ein erstes Blattfederelement (1.1) und ein zweites Blattfederelement (1.2) aufweist.

6. Fahrzeugsitz (30) nach einem der vorhergehenden Ansprüche,
**dadurch gekennzeichnet, dass** die Einstellvorrichtung (20) eine Justiereinrichtung (10), insbesondere einen Hebel umfaßt.

7. Fahrzeugsitz (30) nach einem der Ansprüche 3 bis 6, **dadurch gekennzeichnet, dass** die Verstelleinrichtung (8) Verstellleisten aufweist.

8. Fahrzeugsitz (30) nach einem der vorhergehenden Ansprüche,
**dadurch gekennzeichnet, dass** die Oberplatte (6) über die Emstellvomchtung (20) und einem Schwenkbügel (3) vertikal zur Unterplatte (7) bewegbar ist.

9. Fahrzeugsitz (30) nach einem der Ansprüche 3 bis 8, **dadurch gekennzeichnet, dass** die Schieber (9) über die Verstellung der Verstelleinrichtung (8) auseinander oder zusammen schiebbar sind und in einer Führung (18) der Oberplatte (6) über mindestens zwei weitere Verbindungsmittel (12) linear führbar sind.

10. Fahrzeugsitz (30) nach einem der Ansprüche 8 oder 9, **dadurch gekennzeichnet, dass** der Schwenkbügel (3) über mindestens zwei Lagerböcke (14) an der Oberplatte (6) befestigt ist und über mindestens zwei Ausgleichslaschen (5) an der Unterplatte (7) befestigt ist.

11. Fahrzeugsitz nach einem der vorhergehenden Ansprüche,
**dadurch gekennzeichnet, dass**
zwischen den Schiebern (9.1,9.2) und der Blattfeder (1) eine Kunststoffplatte (31) angeordnet ist.

## Claims

1. Vehicle seat (30) with adjustable leaf spring (1) for cushioning a top plate (6) with respect to a bottom plate (7) and also an adjustment device (20) for altering the spring constants of the leaf spring (1),
**characterized in that** the adjustment device (20) comprises two sliders (9) which are arranged on both sides of securing pins (16.1, 16.2) for the leaf spring (1) and are movable with respect to the securing pins (16.1, 16.2).

2. Vehicle seat (30) according to the previous claim,
**characterized in that** the sliders (9) are movable by means of a sliding block guide (17, 19).

3. Vehicle seat (30) according to one of the previous claims,
**characterized in that** the sliding block guide has a displacement apparatus (8) with at least one guide curve (17), and first connection means (11), via which the sliders (9) are guidable, can be guided via the guide curve (17).

4. Vehicle seat (30) according to claim 3, **characterized in that** the at least one guide curve (17) corresponds to the section of a logarithmic spiral.

5. Vehicle seat (30) according to one of the previous claims,
**characterized in that** the leaf spring (1) has a first leaf spring element (1.1) and a second leaf spring element (1.2).

6. Vehicle seat (30) according to one of the previous claims,
**characterized in that** the adjustment device (20) has an aligning apparatus (10), in particular a lever.

7. Vehicle seat (30) according to one of claims 3 to 6, **characterized in that** the displacement apparatus (8) has displacement bars.

8. Vehicle seat (30) according to one of the previous claims,
**characterized in that** the top plate (6) is vertically movable vertical to the bottom plate (7) via the adjustment device (20) and a swivel arm (3).

9. Vehicle seat (30) according to one of claims 3 to 8, **characterized in that** the sliders (9) can be pushed apart or together via the adjustment of the displacement apparatus (8) and linearly guided in a guide (18) of the top plate (6) via at least two further connection means (12).

10. Vehicle seat (30) according to one of claims 8 or 9, **characterized in that** the swivel arm (3) is secured to the top plate (6) via at least two bearing blocks (14) and is secured to the bottom plate (7) via at least two balancing flaps (5).

11. Vehicle seat according to one of the previous claims,
**characterized in that** a plastic sheet (31) is arranged between the sliders (9.1,9.2) and the leaf spring (1).

## Revendications

1. Siège de véhicule (30) muni d'un ressort à lame (1) réglable pour suspendre sur ressort une plaque supérieure (6) par rapport à une plaque inférieure (7) ainsi que d'un dispositif de réglage (20) pour modifier les constantes de ressort du ressort à lame (1),
**caractérisé en ce que** le dispositif de réglage (20) comporte deux coulisses (9) disposées des deux côtés des boulons de fixation (16.1, 16.2) pour le ressort à lame (1) et pouvant coulisser par rapport aux boulons de fixation (16.1, 16.2).

2. Siège de véhicule (30) selon la revendication précédente,
**caractérisé en ce que** les coulisses (9) peuvent coulisser par l'intermédiaire d'un guide coulissant (17, 19).

3. Siège de véhicule (30) selon l'une quelconque des revendications précédentes,
**caractérisé en ce que** le guide coulissant comporte un dispositif de réglage (8) muni d'au moins un guide incurvé (17) et de premiers moyens de liaison (11) pouvant être guidés par l'intermédiaire du guide incurvé (17), lesdits moyens de liaison (11) permettant de guider les coulisses (9).

4. Siège de véhicule (30) selon la revendication 3, **caractérisé en ce que** l'au moins un guide incurvé (17) est conforme à l'élément d'une spirale logarithmique.

5. Siège de véhicule (30) selon l'une quelconque des revendications précédentes,
**caractérisé en ce que** le ressort à lame (1) comporte un premier élément de ressort à lame (1.1) et un deuxième élément de ressort à lame (1.2).

6. Siège de véhicule (30) selon l'une quelconque des revendications précédentes,
**caractérisé en ce que** le dispositif de réglage (20) comporte un dispositif d'ajustage (10), notamment un levier.

7. Siège de véhicule (30) selon l'une quelconque des revendications 3 à 6,
**caractérisé en ce que** le dispositif de réglage (8) comporte des bandes de réglage.

8. Siège de véhicule (30) selon l'une quelconque des revendications précédentes,
**caractérisé en ce que** la plaque supérieure (6) peut être déplacée verticalement par rapport à la plaque inférieure (7) par l'intermédiaire du dispositif de réglage (20) et d'une traverse pivotante (3).

9. Siège de véhicule (30) selon l'une quelconque des revendications 3 à 8,
**caractérisé en ce que** les coulisses (9) peuvent être coulissées ensemble ou en écartement par l'intermédiaire du réglage du dispositif de réglage (8) et peuvent être guidées de manière linéaire dans un guide (18) de la plaque supérieure (6) par l'intermédiaire d'au moins deux moyens de liaison (12) supplémentaires.

10. Siège de véhicule (30) selon l'une quelconque des revendications 8 ou 9,
**caractérisé en ce que** la traverse pivotante (3) est fixée à la plaque supérieure (6) par l'intermédiaire d'au moins deux supports de palier (14) et est fixée à la plaque inférieure (7) par l'intermédiaire d'au moins deux attaches de compensation (5).

11. Siège de véhicule selon l'une quelconque des revendications précédentes,
**caractérisé en ce qu'**une plaque en plastique (31) est disposée entre les coulisses (9.1, 9.2) et le ressort à lame (1).
